# EUROPEAN PATENT APPLICATION

(11) **EP 4 572 093 A1**
(43) Date of publication of application: **18.06.2025**
(21) Application number: 24219447.0
(22) Date of filing: 12.12.2024
(51) Int. Cl.: H02K 1/14, H02K 1/20, H02K 9/197, H02K 1/18

(54) **A STATOR ASSEMBLY**

(30) Priority: 15.12.2023 GB 202319292
(71) Applicant: Safran Electrical & Power UK Ltd, Pitstone, Buckinghamshire LU7 9GT (GB)
(72) Inventor: BOUBAKER, Nadhem, Pitstone, LU7 9GT (GB)
(74) Representative: Edson, Russell Gregory

(57) **Abstract**

A stator assembly for an electric machine is disclosed. The stator assembly includes a stator core having a back iron and a plurality of teeth extending radially from the back iron and configured to receive stator windings. The back iron comprises a gap to separate the stator assembly into a first stator module and a second stator module. The stator assembly comprises a barrier component located in the gap and extending radially therefrom, such that at least part of the barrier component is received circumferentially between an adjacent pair of teeth of the plurality of teeth. The barrier component is configured to subtend an angle that is less than 1/6 of a circle and/or less than an angle subtended by three adjacent teeth of the plurality of teeth with respect to the rotational axis.

## Description

### Technical Field

The invention relates to a stator assembly for an electric machine. The invention also relates to an electric machine and an aircraft comprising an electric machine.

### Background of the Invention

Electric aircraft propulsion systems typically comprise a fan (propeller), which is connected to an electric machine. The electric machine is typically formed of an assembly of magnetic circuit components, comprising a rotor and a stator. As is well known, rotation of the rotor relative to the stator causes interaction of the magnetic field generated by the rotor with windings provided on the stator, generating an induced electromotive force (EMF) and/or electrical current. In a permanent magnet generator, the rotor's magnetic field is produced by permanent magnets, which induces an AC voltage in the stator windings as the stator windings pass through the moving magnetic field of the permanent magnet. The moving magnetic field may equally be created by rotating windings applied to a rotor, which can be energised to create the moving magnetic field.

Electric machines may sometimes be subject to a fault. For example, a short circuit condition may occur, in particular within windings of the stator. In such conditions, an electric current flows down an unintended path with little electrical resistance, causing an excessive current flow through the unintended path. Short-circuiting may cause an increase in temperature of the stator, which may lead to damage to the component parts.

To limit the impact of such a fault, a means of limiting a flow of current in the event of a short-circuit may be provided. This can inhibit further current generation within the electric machine and can help to protect the windings from further damage, while reducing the transfer of heat between neighbouring windings. However, known solutions tend to limit further useful operation, or reduce the subsequent power output, of the electrical machine.

The present teachings seek to overcome or at least mitigate one or more problems associated with the prior art.

### Summary of the Invention

According to a first aspect of the present invention, there is provided a stator assembly for an electric machine having a rotational axis, the stator assembly comprising any or all of the following features: a stator core, comprising: a back iron; and a plurality of teeth extending radially from the back iron and configured to receive stator windings; wherein the back iron comprises a gap so as to separate the stator assembly into a first stator module and a second stator module; wherein the stator assembly further comprises a barrier component located in the gap and extending radially therefrom with respect to the rotational axis, such that at least part of the barrier component is received circumferentially between an adjacent pair of teeth of the plurality of teeth; wherein the barrier component is configured to subtend an angle with respect to the rotational axis; and wherein the angle subtended by the barrier component is less than 1/6 of a circle and/or wherein the angle subtended by the barrier component is less than an angle subtended by three adjacent teeth of the plurality of teeth with respect to the rotational axis.

Advantageously, the stator assembly is divided into modules, instead of a continuous shape. Dividing the stator core into modules can improve the ease of manufacturing the assembly, as well as improving reparability of the stator assembly. Specifically, in the event of failure of one of the modules, the faulty module is isolated from the adjacent modules, and can be simply removed/replaced, rather than having to replace the entire assembly. Moreover, the modularity of the stator core facilitates the functioning of the electric machine without the presence of all of the stator modules (i.e. the electric machine can operate without one of the modules, at reduced capability).

The provision of the barrier component provides a physical separation between stator modules, and thus isolation of the modules. In this way, in the event of a fault in one of the modules (e.g. a short circuit condition), the barrier will reduce the risk of fault propagation to a neighbouring module, thereby allowing the stator core to continue operating effectively without significant disruption.

The configuration of the barrier component as set forth has been found to provide effective protection against fault propagation between neighbouring modules, without significantly impacting the power generated by the electric machine (i.e. without occupying significant space that may otherwise be occupied by teeth and stator windings).

The barrier component may define a radial extent with respect to the rotational axis and a circumferential extent with respect to the rotational axis, wherein the radial extent is greater than the circumferential extent.

Advantageously, the barrier component is a compact solution that provides the necessary separation and protection between stator modules without occupying a significant amount of circumferential space that might otherwise be occupied by windings.

The barrier component may comprise a planar engagement region, wherein the planar engagement region is arranged in abutment with the back iron.

Advantageously, the planar engagement region provides for a compact means of arranging the barrier component relative to the stator core, reducing wasted space between components, and thus increasing the available circumferential space for stator modules, thereby improving power generation in the electric machine.

The gap and the barrier component may be configured such that the barrier component locates in an interference fit with the back iron via the planar engagement region.

Advantageously, such an arrangement provides a secure, robust fit of the barrier component relative to the stator modules, thereby reducing the risk that the barrier component will become disconnected which may lead to damage of the stator core.

The barrier component may be at least partially hollow so as to define an internal chamber therein.

Advantageously, the at least partially hollow barrier component has been found to provided improved thermal and electrical isolation between stator modules (i.e. compared with a fully solid component), thus mitigating the risk of fault propagation between modules. Moreover, a partially hollow barrier component has reduced weight compared with a full solid component. Reducing weight can be critical in certain industries, e.g. aerospace and automotive industries. Providing the barrier component in a hollow form can also result in reduced material usage, reducing manufacturing costs.

The internal chamber may be fluidly connected to a fluid source, such that a fluid from said fluid source can be introduced into the internal chamber.

Advantageously, having fluid in the internal chamber of the barrier component can further improve the thermal and electrical resistance between adjacent stator modules.

The fluid source may be a coolant source.

The provision of a coolant source facilitates introduction of a coolant into the internal chamber, further improving thermal resistance between adjacent stator modules, reducing the likelihood of the modules overheating or of a fault propagating between modules.

At least one sensor may be located in the internal chamber.

The at least one sensor may comprise a temperature sensor.

Advantageously, the provision of a sensor in the internal chamber can provide an operator with information regarding a condition (e.g. the temperature) in the stator core, and whether a fault has occurred. In this way, the operator can have improved control over the stator assembly.

The stator assembly may further comprise a plurality of stator windings that are wound around at least a portion of the plurality of teeth, and wherein the gap is positioned between an adjacent pair of teeth about which a plurality of windings are wound, such that the barrier component extends radially between adjacent stator windings.

Advantageously, positioning the barrier between adjacent stator windings can reduce the risk of a fault from the windings of one module impacting the windings of a separate module, thus allowing the stator core to continue operating effectively without significant disruption in the event of a fault.

The gap may be positioned between an adjacent pair of teeth about which no windings are wound, such that the barrier component extends radially therebetween.

Advantageously, the combination of teeth with no windings and the barrier component has been found to further increase thermal and mechanical protection between two adjacent modules, reducing the risk of fault propagation therebetween.

The barrier component may comprise a planar engagement region, wherein the planar engagement region is arranged in abutment with said adjacent pair of teeth.

Advantageously, arranging the barrier component as set forth provides for a compact means of arranging the barrier relative to the stator core, reducing wasted space between components and thus increasing the available circumferential space for stator modules, thereby improving power generation in the electric machine.

The barrier component may locate in an interference fit with said adjacent pair of teeth via the planar engagement region.

Locating the barrier component in an interference fit provides a robust connection between the barrier component and adjacent teeth, reducing the risk of the barrier component becoming disconnected and failing to provide the required thermal and/or electrical resistance.

The barrier component may comprise a coated metal, a polyimide glass laminate, a fibrous laminate, or combinations thereof.

Advantageously, the materials are mechanically tough and have been found to increase the dissipation of heat outwards and away from the stator modules.

The back iron may comprise a plurality of gaps so as to separate the stator assembly into at least three stator modules, preferably at least four stator modules, preferably at least six stator modules, preferably at least eight stator modules.

Advantageously, increasing the number of modules increases the adaptability of the stator assembly, as each module occupies a smaller proportion of the circumferential space of the stator core, and so removing a faulty module has less impact on the overall power generation of the electric machine.

The barrier component may define a substantially rectangular cross-section.

Advantageously, a rectangular barrier component is simple to manufacture, and can be simply slotted into the gap, thereby improving the ease of assembling the stator assembly.

The barrier component may define a substantially T-shaped cross-section.

Advantageously, the T-shaped barrier component has been found to provide improved dissipation of heat away from neighbouring stator modules, thus reducing the risk of a module overheating in response to a fault in a neighbouring module.

According to another aspect of the present invention, there is provided an electric machine for use in an aircraft, the electric machine comprising: a stator assembly as described hereinabove; and a rotor, configured to rotate with respect to the stator assembly about the rotational axis.

According to another aspect of the invention, there is provided an aircraft comprising the electric machine as described hereinabove.

### Brief Description of the Drawings

Further features and advantages of the present invention will become apparent from the following description of embodiments thereof, presented by way of example only, and by reference to the drawings, in which:
Figure 1 is a diagram illustrating a stator assembly according to embodiments of the present invention;
Figure 2 is a diagram illustrating a stator assembly according to embodiments of the present invention;
Figure 3 is a graph illustrating torque output of an electric machine of the prior art compared with an electric machine according to embodiments of the present invention
Figure 4 is a diagram illustrating a stator assembly according to the embodiments of present invention;
Figure 5 is a diagram illustrating an electric machine according to embodiments of the present invention;
Figure 6 is a schematic of an aircraft comprising an electric machine according to the embodiments of present invention.

### Detailed Description

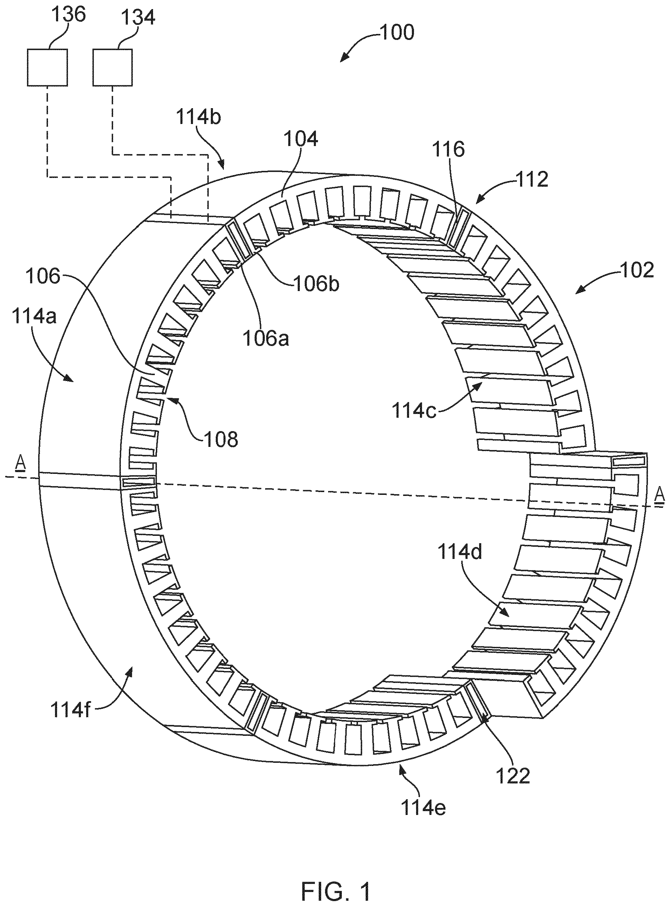

Referring to Figure 1, a stator assembly 100 is illustrated. The stator assembly 100 is configured for use in an electric machine having a rotational axis A. The stator assembly 100 includes a stator core 102. The stator core 102 includes a back iron 104 and a series of teeth 106 extending radially from the back iron 104. In Figure 1, the back iron 104 is substantially annular or ring shaped, e.g. defining a generally circular cross section that is coaxial with the rotational axis A. The back iron may define other shapes in some arrangements. The back iron 104 may define a segment of an annular or ring shape, having a cross section that defines a segment or arc of a circle that is coaxial with the rotational axis.

The teeth 106 extend in a radially inward direction relative to the rotational axis A and are distributed around the circumference of the back iron 104. The stator core 102 includes a series of slots 108 that extend through the stator core in a longitudinal or axial direction, the slots being separated by the plurality of teeth 106. The slots 108 and teeth 106 are configured to receive stator windings, which are not shown in Figure 1 for purposes of clarity.

The back iron 104 includes a gap 112 that separates the stator assembly 100 into at least a first stator module 114a and a second stator module 114b. In the illustrated embodiment a plurality of gaps, such as six gaps 112 are provided, separating the stator assembly into stator modules 114a, 114b, 114c, 114d, 114e, 114f. At least one, and optionally each stator module 114a-f includes a segment of the back iron 104 as well as at least one tooth 106. Any number of gaps may be provided, e.g. to separate the stator assembly into two, three, four, five, six, seven, eight, ten or twelve or more stator modules. In Figure 1, the gaps 112 are distributed evenly around the circumference of the back iron 104 so as to define stator modules 114a-f of generally equal dimensions. The gaps may not be evenly distributed in an alternative arrangement. The gap 112 is configured so as to completely separate the modules 114a-f such that neighbouring modules are isolated from one another via a respective gap 112. In this way, the stator modules are independently removable from the stator assembly 100.

Dividing the stator assembly 100 into modules 114a-f can improve ease of manufacturing the assembly 100 (because the assembly 100 can be made from separate modules rather than a continuous shape), as well as improving the reparability of the stator assembly 100. Having independently removable modules 114a-f is advantageous in the event of failure of a module, as the fault does not significantly impact other modules, and the faulty module can be simply removed from the assembly 100 for maintenance or replacement. As such, the entire assembly 100 is not necessarily put out of use in the event of a fault in a single module. Moreover, the modularity of the stator assembly 100 can facilitate operation of an electric machine at reduced capacity by simply removing one or more of the modules, e.g. if weight reduction is required, or if energy is to be conserved, for example.

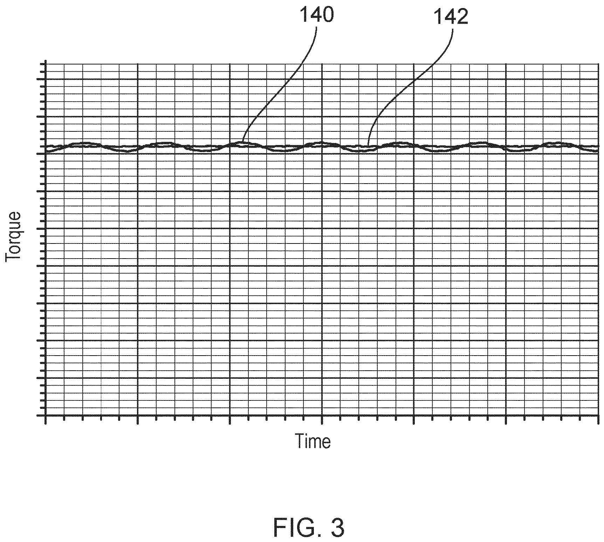

Separating the stator assembly 100 into modules using the gap 112 provides an advantageous isolation without negatively impacting the power output of an electric machine. Referring to Figure 3, there is indicated a graph showing torque output against time of a stator assembly 100 with a gap 112 utilised in an electric machine (e.g. a motor) compared with that of an electric machine having a conventional, i.e. non-modular, stator assembly. As can be seen, the electric machine with an air gap generates a similar torque to that without, albeit with a slight ripple that is within the specified limits.

Returning to Figure 1, the stator assembly 100 includes a barrier component 116. The barrier component 116 defines a generally rectangular cross section in the illustrated arrangement, but any suitable shape may be employed. The barrier component 116 is located in the gap 112 in the back iron 104 so as to locate between adjacent stator modules 114a-f. The barrier component 116 extends radially with respect to the rotational axis, such that at least part of the barrier component 116 is received circumferentially between an adjacent pair of teeth 106. Put another way, the gap 112 separates the stator assembly into stator modules 114a-f which have an 'end tooth', such as a tooth proximal a circumferential end of the respective stator module 114a-f. The barrier component 116 is positioned so as to be received between the end teeth of adjacent stator modules 114a-f. The barrier component 116 provides a physical separation between the modules 114a-f and assists in isolating the modules in the event of a fault. In the illustrated arrangement, six gaps 112 are provided, and thus six barrier components 116 are provided (e.g. one per gap). It should be appreciated that any number of barrier components 116 may be provided. The barrier component 116 is configured to provide thermal and/or electrical and/or magnetic resistance between modules. If a fault occurs, the barrier component 116 reduces the risk of fault propagation between modules, allowing the stator assembly 100 to continue operating effectively.

The barrier component 116 subtends an angle with respect to the rotational axis. It should be understood that the term "subtend" refers to the angular extent of the barrier component 116 in a circumferential direction with respect to the rotational axis of an electric machine, which may otherwise be described as the angle defined between a first and a second circumferential end of the barrier component 116. More specifically, as noted above, the back iron 104 has a cross section that defines a circle, or a segment or arc of a circle, that is coaxial with the rotational axis A. It should be understood that the back iron 104 has a cross section that extends circumferentially about at least part of the 360° circumference or angular extent of a circle defined by the back iron 104 cross section.

The angle subtended by the barrier component 116 is less than 1/6 of a circle, e.g. less than about 1/6 of the 360° circumference defined, or partially defined, by the back iron 104 cross section. Alternatively, or additionally, the angle subtended by the barrier component 116 is less than an angle subtended by three adjacent teeth 106 with respect to the rotational axis.

The angle subtended by a tooth 106 can be seen as the angle defined between a first and a second circumferential end of a respective tooth 106. In this way, the angle subtended by three adjacent teeth 106 should be understood to refer to the angle defined between a first circumferential end of a first of the three teeth 106 and a second circumferential end of the third of the three teeth 106. Put another way, the angle subtended by three adjacent teeth 106 is the angular extent of a first, second and third tooth, as well as the slots 108 between the first and second teeth 106 and the second and third teeth 106.

A barrier component 116 with the angular extent described provides for effective protection against fault propagation between neighbouring modules, without significantly impacting the power ultimately generated by the electric machine (i.e. without occupying significant space that may otherwise be occupied by teeth 106 and stator windings).

The angle subtended by the barrier component 116 may preferably be less than about 1/8 of a circle, preferably less than about 1/10 of a circle, preferably less than about 1/12 of a circle, preferably less than about 1/18 of a circle, preferably less than about 1/24 of a circle, preferably less than about 1/36 of a circle, preferably less than about 1/72 of a circle, preferably less than about 1/100 of a circle.

The angle subtended by the barrier component 116 may preferably be less than an angle subtended by two adjacent teeth 106 of the plurality of teeth with respect to the rotational axis, or preferably less than an angle subtended by one tooth 106 of the plurality of teeth 106 with respect to the rotational axis.

In some arrangements, the angle subtended by the barrier component 116 is less than about 60°, preferably less than about 50°, preferably less than about 45°, preferably less than about 40°, preferably less than about 36°, preferably less than about 30°, preferably less than about 20°, preferably less than about 15°, preferably less than about 10°, preferably less than about 5°, preferably less than about 3°.

It should be understood that the term "about" in the context of the above angles is intended to cover the given value +/- 5% or +/- 2% or +/-1%.

The barrier component 116 has a radial extent and a circumferential extent with respect to the rotational axis. The radial extent of the barrier component 116 is greater than the circumferential extent of the barrier component 116. In this way, the barrier component 116 may be described as having an elongate profile in the radial direction. This has been found to provide a compact arrangement that provides the necessary separation and protection between stator modules 114a-f. The barrier component 116 also has a longitudinal extent (that extends in the longitudinal direction of the rotational axis A). It is preferable for the longitudinal extent of the barrier component 116 to be substantially the same as, or greater than, the longitudinal extent of the teeth 106 and the back iron 104, such that the barrier component 116 completely extends between neighbouring teeth 106, thereby providing complete separation of the stator modules 114a, 114b in the longitudinal direction.

In the figures, the radial extent of the barrier component 116 is substantially the same as the radial extent defined by the teeth 106 and the back iron 104. The barrier component 116 can provide complete separation of the stator modules 114a, 114b in the radial direction, reducing the risk of any fault propagation. Moreover, the barrier component 116 does not extend radially inwardly beyond the teeth 106, so as to not interfere with or obstruct any magnetic air gap that may be present between rotor and stator in the electric machine.

The barrier component 116 includes an engagement region for engaging with the back iron 104. In the illustrated arrangement, the engagement region is configured such that the barrier component 116 engages with the back iron 104 without disrupting the circumference of the back iron 104, such that there is no discontinuity in the back iron 104 when the barrier components 116 are in place.

The engagement region is preferably planar. The preferably planar engagement region is arranged in abutment with the back iron 104. The interface between the barrier component 116 and the back iron 104 can therefore be planar. In the figures, the barrier component 116 includes a preferably planar engagement region on opposing circumferential surfaces, such that the engagement region is in abutment with the back iron 104 on both circumferential sides of the barrier component 116. The engagement region provides for a compact means of arranging the barrier component 116 relative to the stator core 102, reducing wasted space between components and thus increasing the available circumferential space for stator modules 114a-f, improving power density and generation capability in the electric machine. Moreover, the planar engagement region and planar interface between the back iron 104 and barrier component 116 provides for a simple means of manufacturing the assembly 100 (there is no need to manufacture a complex locking mechanism in the back iron 104 and barrier component 116, e.g. a keyed mechanism), and of introducing the barrier component 116 into the stator assembly 100 (the barrier component 116 can be simply slid or pressed into engagement with the back iron 104, rather than a complex locking mechanism that may be difficult to align).

In the illustrated arrangement, the barrier component 116 has substantially the same circumferential, radial and longitudinal extent as that of the gap 112, such that the barrier component 116 can nest in the gap 112. In some arrangements, the gap 112 and the barrier component 116 are configured such that the barrier component 116 locates in an interference fit with the back iron 104, preferably via the planar engagement region. In such an arrangement, the circumferential extent of the barrier component 116 may be slightly larger than that of the gap 112, such that the barrier component 116 can be pressed into the gap 112 to locate in an interference fit with the back iron 104 at opposing circumferential sides of the gap 112. An interference fit provides for a secure and robust fit of the barrier component 116 in the assembly 100, reducing the risk that the barrier component 116 becomes disconnected.

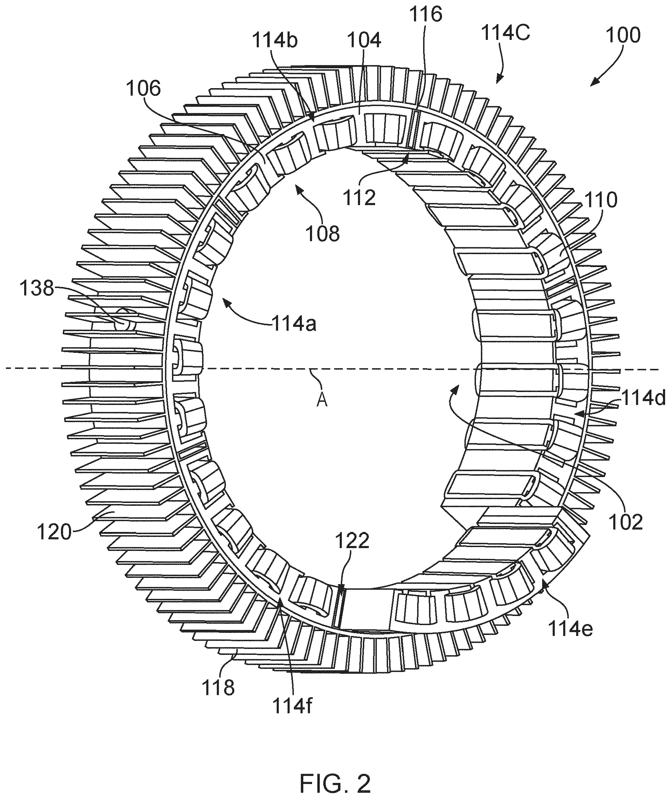

Referring now to Figure 2 in combination with Figure 1, the stator assembly 100 includes stator windings 110. The stator windings 110 are arranged to extend longitudinally through a respective slot 108 and are wound around a respective tooth 106. In the illustrated arrangement, the stator windings 110 are wound around alternate teeth 106 (i.e. with every other tooth having no stator windings 110), however it should be understood that the stator windings 110 may be wound around all the teeth in some embodiments, or any other configuration of teeth. The stator windings 110 may be provided in a concentrated winding configuration or a distributed winding configuration.

In one arrangement, the stator windings 110 are arranged so as to define a plurality of phases, e.g. for three phase AC current. The windings 110 may additionally or alternatively be arranged in a plurality of channels, with each channel having a dedicated set of power electronics, providing separate power outputs from a generator. The stator assembly 100 may be configured such that each module includes windings 110 of a single phase, different to that of neighbouring modules, and/or each module may include windings 110 of a single channel, different to that of neighbouring modules. In this way, the barrier component 116 can be seen as providing a physical barrier between channels in a multichannel stator assembly 100 and/or between phases in a multi-phase stator assembly 100. Neighbouring modules may include windings 110 of the same phase and/or the same channel in some arrangements.

In Figure 2, a housing 118 is provided that at least partially houses the stator core 102. Specifically, the housing extends around an outer surface of the back iron 104. In the figures, a bolt 138 is provided to fixedly secure the stator core 102 within the housing 118, but it should be understood that any suitable attachment means may be utilised. The housing 118 includes a series of fins 120 that project radially outwardly the housing 118. The fins 120 advantageously serve to dissipate heat generated in the stator core 102 and/or from the windings 110 in a radially outward direction, (i.e. away from the stator core 102) to reduce the risk of the stator core 102 and stator windings 110 overheating. The stator modules 114a-f are independently removable from the housing 118 in the longitudinal direction, as is shown in Figure 2, in which one of the modules 114e has been partially removed individually from the stator assembly 100, independently to the other modules. In this way, a faulty module can be removed without having to remove the housing 118.

In Figure 2, the gap 112 is positioned between an adjacent pair of teeth 106 about which no windings 110 are wound. The "end teeth" of one or more of modules 114a-f may therefore have no windings 110. The barrier component 116 extends radially between teeth 106 having no windings 110 thereon. This arrangement provides improved protection between adjacent modules, since the end teeth can assist the barrier component 116 in providing thermal resistance. The planar engagement region of the barrier component may be arranged in abutment with the adjacent pair of teeth (such as the end teeth of each modules 114a-f), such that the interface between the teeth and the barrier component 116 is substantially planar. This is a particularly compact means of isolating adjacent modules 114a-f, while reducing wasted space in the assembly 100 between components. The gap 112 and the barrier component 116 may be configured such that the barrier component 116 locates in an interference fit with the end teeth via the planar engagement region.

As is best seen in Figure 1, the gap 112 extends in a radial direction through a tooth 106 so as to separate the tooth 106 into a first tooth portion 106a and a second tooth portion 106b. In this way, one stator module may include the first tooth portion 106a and the neighbouring stator module may include the second tooth portion 106b. In these figures, the "end tooth" of each stator module 114a-f is a respective tooth portion 106a, 106b, and the barrier component 116 is received between the first and second tooth portions 106a, 106b.

The barrier component 116 may be in the form of a block of material. The barrier component 116 may be at least partially hollow in some arrangements, so as to define an internal void or chamber 122 therein. This can improve thermal, electrical, mechanical and magnetic isolation between stator modules 114a-f. In the figures, the barrier component 116 is open at a longitudinal or axial end, such that the internal chamber 122 is open to the surrounding atmosphere. The barrier component 116 may alternatively be fully closed, such that the internal void or chamber 122 is enclosed.

The barrier component 116 may be coupled to a fluid source 134 (shown schematically in Figure 1 only for purposes of clarity) in some arrangements. In this way, a fluid from the fluid source 134 can be introduced into the internal chamber 122. Any suitable arrangement of fluid or thermal communication between the fluid source 134 and internal chamber 122 may be provided, such as pipes or tubing. The presence of a fluid in the internal chamber 122 improves both the thermal and electrical resistance provided by the barrier component 116. Preferably, the fluid source 134 is a coolant source, and the fluid is a coolant. The coolant may be, for example, water, oil, a cryogenic fluid, a refrigerant, or any suitable coolant fluid, which may be a liquid or a gas, for example.

A sensor arrangement may be included in the internal chamber 122. The sensor arrangement may be resistant to the fluid (e.g. water resistant), so as to co-locate in the internal chamber 122 with the fluid. Alternatively, the sensor arrangement may be isolated from the fluid. Alternatively, only the sensor arrangement or only the fluid connection may be present in the internal chamber 122. The sensor arrangement includes at least one sensor 136 (represented schematically in Figure 1 only for purposes of clarity) that is operable to detect a condition in the internal chamber 122. Preferably, the sensor arrangement includes a temperature sensor (e.g. a thermocouple), which can provide an operator or a control system with information regarding the temperature in the stator core 102, e.g. an increase in temperature may indicate that a fault has occurred in the assembly 100, or may soon occur if excessive temperatures are sustained. A temperature sensor may also provide an indication of the temperature of the windings 110 positioned proximal the chamber 122. The sensor arrangement may be coupled to a control system in some arrangements. Any suitable sensor arrangement may be implemented in order to sense a property of the electric machine via the stator, preferably via the barrier component 116 or its chamber 122, such as a vibration sensor, a pressure sensor, an acoustic sensor, a speed sensor, a rotor position sensor, or combinations thereof.

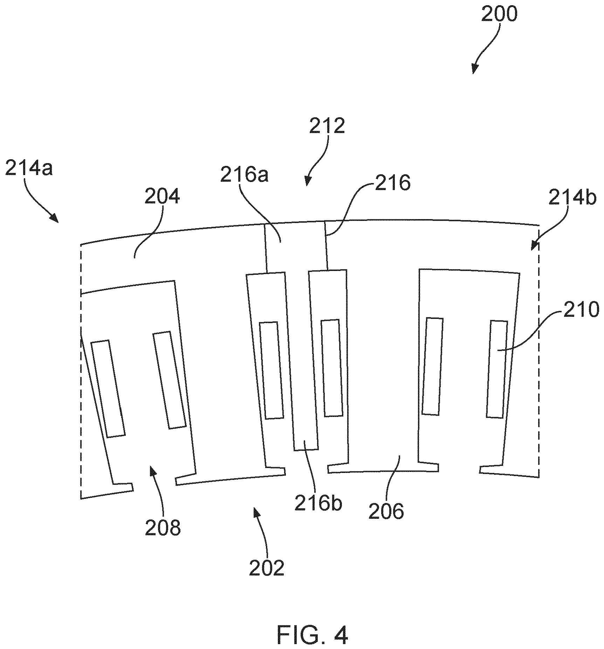

Figure 4 shows another arrangement of a stator assembly 200. Only the differences between the present arrangement and the previously described arrangement will be discussed here. The assembly 200 includes stator windings 210. In this arrangement, the gap 212 is positioned between adjacent pair of teeth about which the windings 210 are wound. The barrier component 216 of this arrangement extends radially from the back iron 204 between adjacent stator windings 210. In this way, the barrier component 216 reduces the risk of a fault from the windings of one stator module 214a impacting the windings of a neighbouring stator module 214b. This can be achieved by its location in between windings 210 of adjacent stator modules. The barrier component 216 preferably extends radially and/or longitudinally along the extent of the slot 208 between windings 210, to provide more complete mechanical, thermal and electrical isolation of the adjacent windings.

The barrier component 216 may define a substantially T-shaped cross-section, e.g. having a cross member 216a that engages with the back iron 204, and a stem member 216b that extends from the cross member 216a into a slot 208 between two adjacent teeth 206. The preferably T-shaped barrier component 216 has been found to improve heat dissipation away from the stator modules 214a, 214b. It should be understood that the barrier component 216 may be any suitable shape, and may comprise a back-iron section 216a arranged to engage a back-iron 204 of adjacent stator modules and a barrier section 216b extending radially from the back iron section 216a, arranged to provide a barrier between adjacent windings 210.

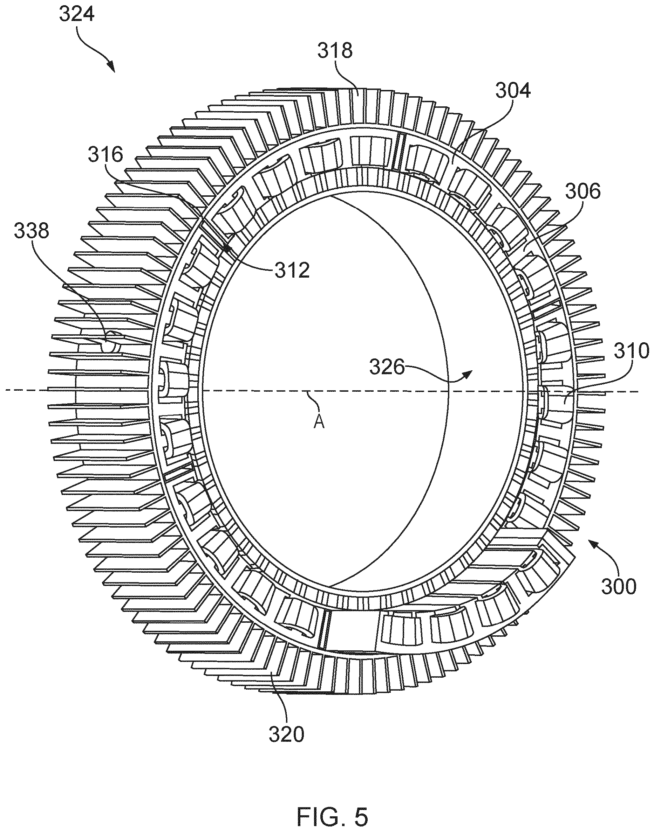

Figure 5 shows an electric machine 324 including a stator assembly 300 as has been previously described, including windings 310. The electric machine 324 includes a rotor 326 configured to rotate with respect to the stator assembly 300 about the rotational axis A. The electric machine 324 may be a motor (i.e. configured to generate torque from an electrical power input) or a generator (i.e. configured to generate electrical power from a mechanical input).

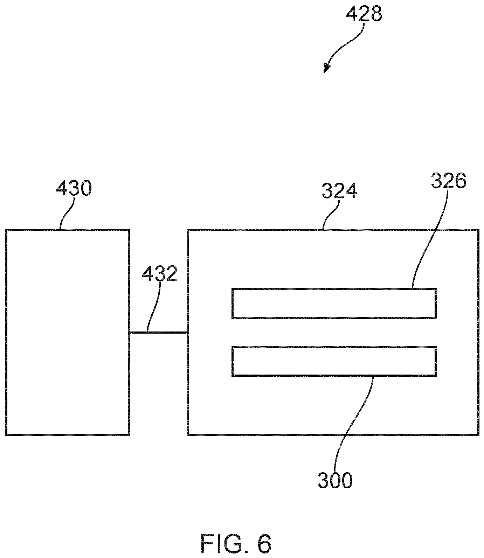

Figure 6 is a schematic illustration showing an aircraft 428. The aircraft 428 may include the electric machine 324 as described above, i.e. including a rotor 326 and a stator assembly 300 as described above. It will be understood that the aircraft 428 and electric machine 324 may include any of the stator assemblies described, such as those described in relation to Figures 1, 2 and 4. The aircraft 428 includes a prime mover, which may be an aircraft engine 430. The aircraft engine 430 comprises an engine output shaft 432 which may be configured to provide or receive rotational drive to/from the electric machine 424.

Although the teachings have been described above with reference to one or more preferred embodiments, it will be appreciated that various changes or modifications may be made without departing from the scope as defined in the appended claims.

## Claims

1. A stator assembly for an electric machine having a rotational axis, the stator assembly comprising:
a stator core, comprising:
a back iron; and
a plurality of teeth extending radially from the back iron and configured to receive stator windings;
wherein the back iron comprises a gap so as to separate the stator assembly into a first stator module and a second stator module;
wherein the stator assembly further comprises a barrier component located in the gap and extending radially therefrom with respect to the rotational axis, such that at least part of the barrier component is received circumferentially between an adjacent pair of teeth of the plurality of teeth;
wherein the barrier component is configured to subtend an angle with respect to the rotational axis; and
wherein the angle subtended by the barrier component is less than 1/6 of a circle and/or wherein the angle subtended by the barrier component is less than an angle subtended by three adjacent teeth of the plurality of teeth with respect to the rotational axis;
wherein each of the first stator module and the second stator module comprises:
an integrally formed structure including a plurality of teeth; and
a plurality of stator windings.

2. A stator assembly according to claim 1, wherein the barrier component defines a radial extent with respect to the rotational axis and a circumferential extent with respect to the rotational axis, wherein the radial extent is greater than the circumferential extent.

3. A stator assembly according to claim 1 or claim 2, wherein the barrier component comprises a planar engagement region, wherein the planar engagement region is arranged in abutment with the back iron.

4. A stator assembly according to claim 3, wherein the gap and the barrier component are configured such that the barrier component locates in an interference fit with the back iron via the planar engagement region.

5. A stator assembly according to any preceding claim, wherein the barrier component is at least partially hollow so as to define an internal chamber therein.

6. A stator assembly according to claim 5, wherein the internal chamber is fluidly connected to a fluid source, such that a fluid from said fluid source can be introduced into the internal chamber; optionally, wherein the fluid source is a coolant source.

7. A stator assembly according to claim 5 or claim 6, wherein at least one sensor is located in the internal chamber; optionally wherein the at least one sensor comprises a temperature sensor.

8. A stator assembly according to any preceding claim, wherein the stator assembly further comprises a plurality of stator windings that are wound around at least a portion of the plurality of teeth, and wherein the gap is positioned between an adjacent pair of teeth about which a plurality of windings are wound, such that the barrier component extends radially between adjacent stator windings.

9. A stator assembly according to any of claims 1 to 7, wherein the gap is positioned between an adjacent pair of teeth about which no windings are wound, such that the barrier component extends radially therebetween.

10. A stator assembly according to claim 9, wherein the barrier component comprises a planar engagement region, wherein the planar engagement region is arranged in abutment with said adjacent pair of teeth; optionally, wherein the barrier component locates in an interference fit with said adjacent pair of teeth via the planar engagement region.

11. A stator assembly according to any preceding claim, wherein the barrier component comprises a coated metal, a polyimide glass laminate, a fibrous laminate, or combinations thereof.

12. A stator assembly according to any preceding claim, wherein the back iron comprises a plurality of gaps so as to separate the stator assembly into at least three stator modules, preferably at least four stator modules, preferably at least six stator modules, preferably at least eight stator modules.

13. A stator assembly according to any preceding claim, wherein the barrier component defines a substantially rectangular cross-section, or a substantially T-shaped cross-section.

14. An electric machine for use in an aircraft, the electric machine comprising:
a stator assembly according to any of claims 1 to 13; and
a rotor, configured to rotate with respect to the stator assembly about the rotational axis.

15. An aircraft comprising the electric machine according to claim 14.
